# EUROPÄISCHE PATENTSCHRIFT

(11) **EP 2 839 739 B1**
(45) Veröffentlichungstag und Bekanntmachung des Hinweises auf die Patenterteilung: **22.02.2017**
(21) Anmeldenummer: 14181785.8
(22) Anmeldetag: 21.08.2014
(51) Int. Cl.: A01M 7/00

(54) **Landwirtschaftliche Verteilmaschine mit Verteilvorrichtung und System zur Bewegungssteuerung der Verteilvorrichtung**
Agricultural spreader machine with distribution device and system for controlling the movement of the distribution device
Épandeur agricole doté d'un dispositif d'épandage et système de commande de mouvement du dispositif d'épandage

(30) Priorität: 22.08.2013 DE 102013109086
(43) Veröffentlichungstag der Anmeldung: 25.02.2015
(73) Patentinhaber: HORSCH LEEB Application Systems GmbH, 94562 Oberpöring (DE)
(72) Erfinder: Hirthammer, Otto, 93128 Hirschling (DE); Leeb, Theodor, 94562 Oberpöring (DE)
(74) Vertreter: Benninger, Johannes

(56) Entgegenhaltungen:
- EP-A1- 2 186 405
- DE-A1- 4 140 254
- FR-A1- 2 734 499
- FR-A1- 2 965 454

## Beschreibung

Die vorliegende Erfindung betrifft eine Verteilvorrichtung für eine landwirtschaftliche Verteilmaschine zum Ausbringen von flüssigen und/oder festen Wirkstoffen mit den Merkmalen des unabhängigen Anspruchs 1.

Feldspritzen und an Arbeitsmaschinen wie Traktoren angehängte Verteilvorrichtungen oder Spritzgestänge weisen teilweise sehr große Arbeitsbreiten von zwanzig Metern und mehr auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abdrift des Spritzmittels mit zunehmender Distanz der Spritzdüsen vom Boden stark an, da die zielgerichtete Verteilung fein verstäubter Tropfen bereits von geringen Luftbewegungen negativ beeinflusst wird. Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, sowie das Spritzgestänge dem Bodenrelief bzw. einer Bodenkontur nachzuführen, da bereits geringe Schrägstellungen des Spritzgestänges zu großen Abstandsdifferenzen der Düsen zum Boden führen.

Ein Verfahren zur Bewegungssteuerung oder Regelung eines Spritzgestänges ist aus dem Stand der Technik bereits bekannt. So wird in der EP 2 591 657 A1 eine fahrbare Vorrichtung zum Ausbringen von flüssigen und/oder festen Wirkstoffen beschrieben, die ein Ausbringgestänge umfasst, welches aus einem Mittelteil und seitlichen Auslegearmen besteht und an einem Aufhängepunkt schwenkbar gelagert ist. Zur Bewegungssteuerung ist das Mittelteil über wenigstens eine regelbare Stelleinrichtung mit einem Rahmenabschnitt gekoppelt. Die Stelleinrichtung stellt in einem ersten Betriebsmodus, in dem das Ausbringgestänge weitestgehend von Drehmomenten um die Schwenkachse durch den Aufhängepunkt, resultierend aus Fahrzeugbewegungen um die Fahrzeuglängsachse, entkoppelt ist, eine weitgehend stellkraftfreie mechanische Verbindung her. Zudem leitet die Stelleinrichtung in einem zweiten Betriebsmodus bzw. in einem Verstellmodus, eine definierte Stellkraft oder ein definiertes Stellmoment zwischen dem Mittelteil und dem Rahmenabschnitt, zur Verschwenkung des Ausbringgestänges relativ zum Rahmen, ein. Dies geschieht weitgehend unabhängig von Störmomenten, die aus Fahrzeugbewegungen resultieren.

Zwar lässt sich mit dem oben beschriebenen System eine weitgehend parallele Führung des Spritzgestänges zu einer Bodenoberfläche realisieren. Allerdings ist damit kein Verfahren offenbart, das eine Anpassung von bspw. nur einer Seite oder einem Ausleger des Spritzgestänges ermöglicht.

Weiter sind durch die FR 2 734 499 A1 eine Verteilvorrichtung und ein Verfahren zur Anpassung der Verteilvorrichtung an die Bodenkontur offenbart. Die Ausleger erstrecken sich jeweils seitlich von einem Mittelteil der Verteilvorrichtung nach außen und können über Stellglieder jeweils um eine horizontale Achse verschwenkt werden. Die Ausleger werden derart gesteuert, dass ihr Abstand in Bezug auf die Bodenkontur einen definierten Wert beibehält. Die beiden Ausleger stehen dabei über eine Koppeleinrichtung miteinander in Wirkverbindung.

Weiterhin wird in der EP 2 186 405 A1 ein Spritzgestänge und ein Verfahren zu dessen Steuerung beschrieben, mittels dessen eine Anpassung des Spritzgestänges an ein Bodenrelief oder eine Bodenkontur nahezu ermöglicht werden soll. Das Spritzgestänge verfügt über mindestens zwei über Gelenke an einem Mittelteil angeordnete Ausleger, wobei diese Ausleger wiederum über horizontale Achsen schwenkbar zueinander angeordnet sind und die Ausleger mittels Gelenken verbunden sind, und eine Stellbewegung der Ausleger zueinander aktiv steuerbar ist. Die Stellbewegung wird mittels eines Stellgliedes ausgeführt, wobei dieses wiederum als hydraulisch arbeitender Zylinder ausgebildet sein kann.

Bei derartigen Spritzgestängen, bei denen die Ausleger mittels hydraulischer Zylinder um horizontale Achsen verschwenkt werden können, besteht das Problem, dass sich die Ausleger nicht immer symmetrisch zueinander bewegen. Werden etwa beide Ausleger verschwenkt, bewegen sich diese aufgrund der ungleichmäßigen Bewegungen der den jeweiligen Auslegern zugeordneten Zylinder nicht gleichmäßig zueinander, was wiederum ein Drehmoment auf die Gestängeaufhängung hervorruft, welches gedämpft werden muss und ebenso die Verteilung der Spritzflüssigkeit negativ beeinflusst. Zwar sind hierfür diverse Lösungsansätze bekannt, bspw. die Ansteuerung der Zylinder mittels Stromteilerventile, doch sind auch diese diversen Bauartbedingen Ungenauigkeiten unterworfen, wodurch wiederum nicht sichergestellt werden kann, dass sich die Ausleger symmetrisch zueinander bewegen.

Ein vorrangiges Ziel der vorliegenden Erfindung besteht darin, eine Verteilvorrichtung bzw. ein Spritzgestänge zum Ausbringen von festen und oder flüssigen Stoffen zur Verfügung zu stellen, bei der zum einen das Verschwenken um horizontale Schwenkachsen von wenigstens zwei seitlichen Auslegern annähernd symmetrisch zu einem Mittelteil erfolgt, so dass das Spritzgestänge in seiner Bewegungssteuerung an eine Bodenkontur angepasst werden kann.

Dieses Ziel wird durch eine Verteilvorrichtung bzw. ein Spritzgestänge erreicht, welches die Merkmale des Anspruchs 1 umfasst. Merkmale vorteilhafter Weiterbildungen der Erfindung ergeben sich aus den abhängigen Ansprüchen. Infolge dieser Maßnahmen werden zwei, um horizontale Achsen schwenkbar gelagerte und mit einem Mittelteil verbundene seitliche Ausleger mit Mitteln und/oder Koppelelementen in einer Weise wirkverbunden, dass die Bewegung von wenigstens einem Ausleger mit Hilfe der oder der Koppeleinrichtung symmetrisch auf einen gegenüberliegenden Ausleger übertragen werden, wodurch erreicht wird, dass die Ausleger annähernd symmetrisch zum Mittelteil verschwenkt werden. Zudem kann vorgesehen sein, dass die Verteilvorrichtung um einen zentralen Aufhängepunkt drehbar gelagert ist, und eine Anpassung an eine Bodenkontur von wenigstens einem Ausleger durch symmetrisches Verschwenken beider Ausleger und Drehen der Verteilvorrichtung um den Aufhängepunkt erfolgt.

So schlägt die Erfindung eine Verteilvorrichtung zum Ausbringen von flüssigen und/oder festen Wirkstoffen wie Dünger, Spritzmittel o. dgl. vor. Die Verteilvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge mit einem Mittelteil und über horizontale Schwenkachsen schwenkbare seitliche Ausleger. Die Länge der Ausleger kann je nach Verwendungszweck variieren. Typischerweise können die Ausleger mit einer Länge von ca. 12 bis 18 Metern für jeden Ausleger ausgebildet sein, so dass sich unter Berücksichtigung des Mittelteils mit ca. 2 bis 3 Metern Breite eine gesamte Arbeitsbreite des Spritzgestänges von bis zu 40 Metern oder mehr ergeben kann. Die seitlichen Ausleger werden mittels vertikaler Achsen mit dem Mittelteil verbunden. Mit diesen vertikalen Achsen können die Ausleger verschwenkt werden, und zwar zwischen einer ersten Arbeitsposition, in der die Ausleger und das Mittelteil annähernd in einer Linie quer zur Fahrtrichtung stehen, und einer zweiten Transportposition, in der die Ausleger zum Mittelteil so geklappt werden, dass eine für eine Straßenfahrt erforderliche Transportbreite erreicht wird.

Wenn im vorliegenden Zusammenhang von Schwenkbarkeit der Ausleger oder dem Drehen der Verteilvorrichtung ungefähr parallel zur Fahrrichtung die Rede ist, so sind damit andere Bewegungsfreiheitsgrade der Verteilvorrichtung nicht ausgeschlossen. Die vorliegende Erfindung bezieht sich allerdings nur auf Bewegungen parallel zur Fahrtrichtung, bei der die quer zur Fahrrichtung beidseitig an einem Mittelteil auskragenden Ausleger Auf- und Abbewegungen machen, oder bei der die Verteilvorrichtung im Uhrzeigersinn und/oder im Gegenuhrzeigersinn gedreht wird.

An den Auslegern und am Mittelteil sind in der Regel Spritzdüsen zum Ausbringen des jeweiligen Wirkstoffes oder Spritzmittels angebracht. Die Ausgestaltung dieser Spritzdüsen kann im Rahmen der vorliegenden Erfindung hinsichtlich der gewünschten Ausbringmenge pro Zeit oder pro Fläche des zu verteilenden Spritzmittels erfolgen. Das Erscheinungsbild des Spritzstrahls kann unterschiedliche Formen, wie bspw. fächerartige oder kegelartige Ausgestaltungen aufweisen. Die Ausgestaltung der Verteilvorrichtung mit mehreren unterschiedlichen Düsen ist ebenfalls möglich. Auch kann die Anzahl der Spritzdüsen je Ausleger bzw. je Verteilvorrichtung je nach deren Verwendungszweck variieren.

Das Spritzgestänge ist erfindungsgemäß aus einem Mittelteil und wenigstens zwei seitlichen Auslegern gebildet. Die Verbindung erfolgt jeweils über Schwenkachsen oder Drehpunkte, welche anforderungsgerecht ausgestaltet werden müssen, um die durch das Gestänge auftretenden Kräfte aufnehmen zu können und zugleich noch eine ausreichende Flexibilität zu gewährleisten, damit das Spritzgestänge unter allen auftretenden Betriebsbedingungen vor Beschädigungen geschützt ist bzw. nicht beschädigt werden kann.

Um zusätzlich zum Schwenkvorgang der Ausleger oder des Spritzgestänges eine Höhenverstellbarkeit zu ermöglichen, ist zudem vorgesehen, ein Stützelement zwischen dem Maschinenrahmen der landwirtschaftlichen Verteilmaschine und dem Mittelteil des Spritzgestänges so auszuführen, dass dieses in deren Höhe verstellt werden kann. Um diesen Anforderungen gerecht zu werden, kann die Ausgestaltung des Stützelements bspw. durch parallel angeordnete Gestänge bzw. sog. Parallelogrammgestänge o. dgl. erfolgen. Auch zusätzliche vertikale Achsen wären vorstellbar, die so gestaltet sind, dass das Spritzgestänge über diese in deren Höhe verschiebbar wäre. An den Stützelementen wird das Mittelteil des Spritzgestänges über einen Aufhängepunkt montiert. Vorzugsweise geschieht dies mittels einer Drehlagerung, über die sich das Spritzgestänge drehen kann. Der Aufhängepunkt ist in der Regel so gewählt dass sich dieser im Schwerpunkt der Verteilvorrichtung befindet, wobei dieser in der Regel bei einer symmetrisch aufgebauten Verteilvorrichtung im Zentrum, also in der Mitte dieses parallel zur Fahrtrichtung befindet. Es wäre jedoch auch vorstellbar, den Aufhängepunkt außerhalb oder nicht im Schwerpunkt anzubringen.

Die Bewegungssteuerung der beiden Ausleger erfolgt mittels zumindest eines Stellgliedes, das zwischen den beiden Auslegern angebracht ist. Durch Positions- und/oder Längenänderungen des Stellglieds werden die Ausleger um die horizontalen Schwenkachsen, in Bezug auf die Bodenkontur, nach oben oder unten verschwenkt. Die Stellglieder können jeweils durch einen Hydraulikzylinder oder einen Hydraulikmotor ausgebildet sein. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch sind nichthydraulische Ausgestaltungen des Stellgliedes vorstellbar. Allerdings sind auch andere Stelleinrichtungen denkbar, bspw. elektromotorisch betriebene Linearmotoren oder dgl.

Die Anordnung des Stellgliedes kann auf vielfältige Weise erfolgen. So sieht die Erfindung vor, dass das Stellglied zwischen den beiden Auslegern montiert wird und diese dadurch verbunden werden. Es wäre aber auch vorstellbar, das Stellglied bspw. so zu montieren dass dieses nur mit einem Ausleger unmittelbar verbunden wäre.

Um eine symmetrische Bewegung der Ausleger zu erreichen, sind diese jeweils mit Mitteln bzw. mit Koppelementen wirkverbunden, so dass Schwenkbewegungen von wenigstens einem der Ausleger mit den Mitteln oder Koppelelementen symmetrisch auf den gegenüberliegenden Ausleger übertragen werden. In einer bevorzugten Ausführungsform werden die Mittel bzw. die Koppelelemente aus einer Schwenkhebel-Koppelstangen-Anordnung gebildet. So sieht die Erfindung einen drehbar gelagerten Schwenkhebel vor, der mittig bzw. annähernd mittig drehbar zwischen den wenigstens zwei Auslegern angebracht wird. Der Schwenkhebel ist mit Gelenken versehen, an denen wiederum Koppelstangen angebracht werden können. So kann bspw. eine erste Koppelstange zwischen einem ersten Gelenk, welches sich vorne, in Bezug auf die Fahrtrichtung auf dem Schwenkhebel befindet und einem linken Ausleger angebracht werden. Außerdem kann eine zweite Koppelstange zwischen einem zweiten Gelenk, welches sich hinten, in Bezug auf die Fahrtrichtung auf dem Schwenkhebel befindet, und einem rechten Ausleger angebracht werden. Wahlweise wäre auch eine umgekehrte Anordnung möglich. Durch Positions- und/oder Längenänderungen des Stellglied und der daraus resultierenden Bewegung von zumindest einem der Ausleger erfolgt mittels der Koppelstange eine Übertragung dieser Bewegung über ein erstes oder zweites Gelenk auf den Schwenkhebel, wodurch dieser eine entsprechende Drehbewegung durchführt. Über das gegenüberliegende erste oder zweite Gelenk wird diese Drehbewegung durch die weitere Koppelstange auf den gegenüberliegenden Ausleger übertragen, wodurch die beiden Ausleger jeweils symmetrisch bzw. annähernd symmetrisch zueinander nach oben oder nach unten, in Bezug auf die Bodenoberfläche, verschwenkt werden.

Neben der beschriebenen Schwenkhebel-Koppelstangen-Anordnung wären auch noch diverse andere Koppelelemente oder -mittel vorstellbar. So wäre auch eine Koppelung mittels drehbaren Zahnrades und jeweils links und rechts dazu angebrachten Zahnstangen vorstellbar. Ebenso wären diverse andere mechanische Koppelelemente denkbar. Auch eine einteilige Gestaltung des Mittels wäre denkbar. Darüber hinaus könnten auch hydraulische Mittel Anwendung finden, vorzugsweise könnten bei einer derartigen Koppelung hydraulische Zylinder verwendet werden, die unter Verwendung eines Master-Slave-Prinzips gekoppelt sein können. Das heißt, dass deren Größe so konzipiert ist, dass durch Bewegung von wenigstens einem Ausleger zunächst Öl von einem Zylinder verdrängt wird und mittels dieser verdrängten Ölmenge ein weiterer Zylinder bewegt bzw. angesteuert wird. Auch elektronische Mittel könnten verwendet werden, welche bspw. durch Lagesensoren angesteuert werden. Generell kann die Koppelung auf verschiedenste Weise erfolgen, wobei diese jedoch stets so ausgeführt sein muss, dass eine nahezu spielfreie, symmetrische Übertragung der Schwenkbewegung von einem Ausleger auf einen gegenüberliegenden Ausleger gewährleistet werden kann.

Neben der symmetrischen Bewegung der Ausleger wird durch die erfindungsgemäße Koppelung der Ausleger auch die Gewichtsverteilung wesentlich verbessert, d.h. durch die Verbindung der Ausleger werden Gewichtsdifferenzen und dadurch hervorgerufene Drehmomente jeweils gegenseitig übertragen bzw. teilweise gegenseitig aufgehoben, wodurch sich der Schwerpunkt des Spritzgestänges stets annähernd im Zentrum zwischen den zwei Auslegern befindet, was bedeutet, dass bei einer Anordnung des Aufhängepunktes im Schwerpunkt auf diesen oder auf die Gestängeführung wesentlich geringere Kräfte wirken.

Darüber hinaus wird mit der erfindungsgemäßen Koppelung der zwei seitlichen Ausleger erreicht, dass zum Verschwenken dieser um die horizontale Achse nur noch lediglich ein Stellglied erforderlich ist.

Die Anpassung des Spritzgestänge bzw. von wenigstens einem der zwei Ausleger an die Bodenkontur kann dadurch erfolgen, dass der Verteilvorrichtung bzw. der landwirtschaftlichen Verteilmaschine eine Istwerterfassung zugeordnet ist, welche zunächst die relativ Position der Verteilvorrichtung zu einer Bodenkontur oder Bodenoberfläche ermittelt. Die Istwerterfassung erfolgt hierbei bspw. mittels Ultraschallsensoren, welche an der dem Boden zugewandten Seite des Spritzgestänges angeordnet sind, um somit den aktuellen Abstand des Gestänges zur Bodenoberfläche zu ermitteln. Aber auch andere Arten von Sensoren wären denkbar. Ebenso könnte die Istwerterfassung auf Basis von GPS-Daten erfolgen. Die von der Istwerterfassung ermittelten Werte werden an eine Datenverarbeitungsvorrichtung oder an eine Rechnereinheit übertragen. Dies kann mittels einer Kabelverbindung oder auch kabellos erfolgen. Weichen die von der Istwerterfassung ermittelten Werte von einem vordefinierten Sollwert ab, so wird das Stellglied, zum Verschwenken der Ausleger von der Rechnereinheit angesteuert, bzw. es wird ein Signal ausgegeben, wodurch das Stellglied eine Positions- und/oder Längenänderung durchführt und somit eine Änderung der Relativposition der Ausleger durchführt, so dass sich beide Ausleger wiederum in Richtung zur Bodenoberfläche oder von dieser weg bewegen. Bei der Datenverarbeitungsvorrichtung bzw. der Rechnereinheit kann es sich prinzipiell um jede elektronische Vorrichtung handeln, die in der Lage ist, einen Soll-Ist-Wert-Vergleich durchzuführen und auf dessen Grundlage ein Signal oder einen Stellwert auszugeben. Bewährt haben sich hierfür computergestützte Systeme.

Wird von der Istwerterfassung ermittelt, dass nur eine einseitige Anpassung des Spritzgestänges an eine Bodenkontur erforderlich ist, werden wiederum zunächst beide Ausleger über das Stellglied und die Koppelelemente symmetrisch verschwenkt. Zusätzlich wird das Spritzgestänge noch über einen Aufhängepunkt bzw. eine Drehlagerung, mittels derer das Spritzgestänge mit einem Stützabschnitt bzw. einer landwirtschaftlichen Verteilmaschine verbunden ist, parallel zur Fahrtrichtung, im Uhrzeigersinn oder entgegengesetzt zum Uhrzeigersinn solange gedreht, bis die von der Istwerterfassung ermittelten Werte wieder nahezu mit den vordefinierten Sollwerten übereinstimmen. Das bedeutet, dass die Anpassung des Spritzgestänges an eine Bodenkontur vorzugsweise durch eine Kombination von symmetrischem Verschwenken der Ausleger und anschließendem Verdrehen des Spritzgestänges erfolgt. Wahlweise kann aber auch jeder Vorgang, also Verschwenken der Ausleger oder Verdrehen des Spritzgestänges separat ausgeführt werden.

Das Verschwenken des Spritzgestänges kann auf vielfältige Weise erfolgen, vorzugsweise mit einem zusätzlichen Stellantrieb, welcher wiederum von der Datenverarbeitungseinrichtung angesteuert wird. Als Stellantrieb kann bspw. ein Drehantrieb, welcher im Aufhängepunkt mit integriert ist, Verwendung finden. Auch wäre ein lineares Stellelement möglich, welches zum einen entfernt vom Aufhängepunkt mit dem Mittelteil verbunden ist und zum anderen über eine fahrzeugfeste Lagerung mit der landwirtschaftlichen Verteilmaschine verbunden ist.

Wie oben beschrieben, wird eine Anpassung von nur einem Ausleger an eine Bodenkontur durch eine Kombination aus einem symmetrischen Verschwenken der Ausleger und einem Verdrehen der Verteilvorrichtung erreicht, wobei dies keineswegs nacheinander durchgeführt werden muss. Es wäre auch vorstellbar, dass ein Verschwenken und ein Drehen nahezu zeitgleich erfolgt, wodurch zumindest eine nahezu Echtzeitanpassung an die Bodenoberfläche ermöglicht wird.

Es sei noch erwähnt, dass die erfindungsgemäße Koppelung der Ausleger auch an einer Verteilvorrichtung Anwendung finden kann, welche nicht über einem Aufhängepunkt gedreht werden kann.

Zusammenfassend finden sich nochmals einige wichtige Aspekte der vorliegenden Erfindung. So sieht die Erfindung eine Verteilvorrichtung für eine landwirtschaftliche Verteilmaschine zum Ausbringen von flüssigen und/oder festen Wirkstoffen vor. Die Verteilvorrichtung bzw. Verteilmaschine weist einen Mittelteil und wenigstens zwei, über horizontale Schwenkachsen drehbar gelagerte und mit dem Mittelteil in Verbindung stehende Auslegern auf, wobei wenigstens einem Ausleger wenigstens ein Stellglied zur Variation einer Schwenklage bzw. eines Schwenkwinkels des wenigstens einen Auslegers oder beider Ausleger um die horizontale Schwenkachse gegenüber dem Mittelteil zugeordnet ist, womit insbesondere ein vorgebbarer Abstand eines der Ausleger oder beider Ausleger zu einer Bodenkontur aufrechterhalten werden kann. Es ist weiterhin eine Koppeleinrichtung vorhanden, die zur Übertragung einer Schwenkbewegung und/oder veränderlichen Schwenklage des wenigstens einen mit dem Stellglied gekoppelten Auslegers auf den jeweils anderen Ausleger eine direkte Wirkverbindung zwischen den beiden Auslegern herstellt. Diese Koppeleinrichtung kann vorzugsweise eine mechanische Verbindung zwischen den beiden Auslegern herstellen.

Eine Variante der Verteilvorrichtung sieht vor, dass die Koppeleinrichtung eine Wirkverbindung oder mechanische Verbindung zur ungefähr gleichsinnigen Übertragung einer Schwenkbewegung und/oder einer eingestellten Schwenklage bzw. eines Schwenk- oder Relativwinkels um eine horizontale Schwenkachse des mittels des Stellgliedes verschwenkbaren ersten Auslegers auf den zweiten Ausleger herstellt. Weiterhin kann die Koppeleinrichtung eine Wirkverbindung oder mechanische Verbindung zur ungefähr symmetrischen Übertragung einer Schwenkbewegung und/oder einer eingestellten Schwenklage bzw. eines eingestellten Schwenkwinkels um eine horizontale Schwenkachse des mittels des Stellgliedes verschwenkbaren ersten Auslegers auf den zweiten Ausleger herstellen.

Das wenigstens eine Stellglied kann weiterhin mit wenigstens einem der Ausleger verbunden sein, so dass dieser aufgrund einer Positions- und/oder Längenänderung des Stellgliedes um die horizontale Schwenkachse verschwenkt wird. Das wenigstens eine Stellglied kann auch mit beiden Auslegern verbunden sein, wobei wenigstens einer der Ausleger aufgrund einer Positions- und/oder Längenänderung des Stellglied um die horizontale Schwenkachse verschwenkt wird.

Die oben erwähnten Mittel oder Koppeleinrichtungen können in einer bevorzugten Ausführungsvariante als wenigstens zwei hydraulisch arbeitende Linearantriebe ausgeführt sein, die mittels Master-Slave-Prinzip verbunden sind. Die Mittel oder Koppeleinrichtungen können auch als hydraulische Motoren ausgeführt sein. Auch eine Variante der Mittel oder Koppeleinrichtungen, bei der diese als elektrisch arbeitende Stellglieder ausgeführt sind, ist denkbar. Weiterhin können die Mittel oder Koppeleinrichtungen als Schwenkhebel-Koppelstangen-Verbindung ausgeführt sein. Als Alternative hierzu können die Mittel oder Koppeleinrichtungen als Zahnrad-Zahnstangen-Verbindung ausgeführt sein. Die Mittel oder Koppeleinrichtungen können insbesondere einteilig ausgebildet sein. Auch kann vorgesehen sein, dass die Mittel oder Koppeleinrichtungen drehbar zwischen den wenigstens zwei Auslegern angebracht sind. Eine weitere Variante kann vorsehen, dass den wenigstens zwei Auslegern solche Mittel oder Koppeleinrichtungen derartig zugeordnet sind, dass eine Gewichtsübertragung von einem Ausleger auf den jeweiligen gegenüberliegenden Ausleger erfolgt.

Im Folgenden sollen Ausführungsbeispiele die Erfindung und Ihre Vorteile anhand der beigefügten Figuren näher erläutern. Weitere Merkmale, Ziele und Vorteile der vorliegenden Erfindung gehen aus der nun folgenden detaillierten Beschreibung hervor, die als nicht einschränkendes Beispiel dient und auf die beigefügten Zeichnungen Bezug nimmt.
Fig. 1 zeigt eine schematische Perspektivansicht einer als selbstfahrende Feldspritze ausgeführten landwirtschaftlichen Verteilmaschine mit einer heckseitig angebauten Verteilvorrichtung bzw. einem Spritzgestänge.
Fig. 2 zeigt in zwei schematischen Detailansichten einen mittleren Bereich der Verteilvorrichtung, wie sie in Fig. 1 dargestellt ist.
Fig. 3 zeigt in zwei schematischen Heckansichten verschiede Auslenkstellungen und Bodenkontur-Anpassungen eines an der landwirtschaftlichen Verteilmaschine angebauten Spritzgestänges.

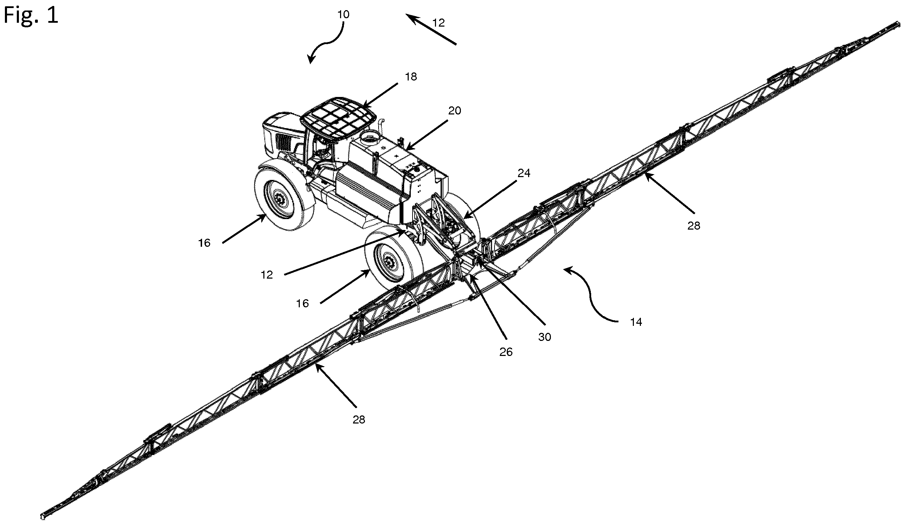

Gleiche oder gleich wirkende Elemente der Erfindung sind in den Figuren 1 bis 3 mit jeweils gleichen Bezugsziffern bezeichnet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die nachfolgend näher erläuterten Figuren 1 bis 3 verdeutlichen eine bevorzugte Ausführungsform einer Verteilvorrichtung bzw. eines Spritzgestänge, wie es typischerweise an Arbeitsmaschinen, Zugmaschinen oder anderen Trägerfahrzeugen angehängt oder aufgesattelt sein kann. Solche Trägerfahrzeuge können bspw. Spezialfahrzeuge sein, die einen Tank für den auszubringenden Wirkstoff sowie die erfindungsgemäße Verteilvorrichtung tragen können. Als Zugfahrzeug kommen jedoch gleichermaßen herkömmliche landwirtschaftliche Zugmaschinen bzw. Traktoren in Frage.

Die schematische Perspektivansicht der Fig. 1 zeigt eine als selbstfahrende Feldspritze 10 ausgestaltete landwirtschaftliche Verteilmaschine 10 mit einer heckseitig angebauten Verteilvorrichtung 14 bzw. einem sich quer zur Fahrtrichtung 12 ersteckenden Spritzgestänge 14 in Arbeitsposition. Die Verteilvorrichtung 14 dient zum Ausbringen von flüssigen und/oder festen Wirkstoffen wie bspw. Dünger oder Pflanzenschutzmitteln. Die Feldspritze 10 besteht im Wesentlichen aus zwei Fahrzeugachsen 16, einer Kabine 18 und aus einem Vorratsbehälter 20, wobei wiederum alle Komponenten mittels eines Maschinenrahmens 22 verbunden werden. Im hinteren Bereich der Feldspritze 10 ist über einen Stützabschnitt 24 das Spritzgestänge 14 mit dem Maschinenrahmen 22 verbunden. Ein derartiger Stützabschnitt 24 kann entweder ein fahrzeugfestes Rahmenelement sein, das bspw. durch einen Maschinenrahmen gebildet wird. In bevorzugter Weise ist der Stützabschnitt 24 jedoch höhenverstellbar gegenüber einem Maschinenrahmen angebracht, wobei im aufgeführten Beispiel der Stützabschnitt 24 als Viergelenkanordnung ausgeführt ist.

Das Spritzgestänge 14 umfasst ein Mittelteil 26 mit einem Aufhängepunkt 30, mit dem das Spritzgestänge 14 drehbar mit dem Stützabschnitt 24 verbunden wird, sowie beidseitig daran befestigte Ausleger 28, die wahlweise ein- oder mehrfach klappbar ausgebildet sein können, um bspw. in eine für eine Straßen- oder Transportfahrt geeignete Anordnung gebracht werden zu können. An den Auslegern 28 oder den Auslegearmen, sowie am Mittelteil 26 können bspw. eine Vielzahl von hier nicht dargestellten Spritzdüsen zum gleichmäßigen und/oder gesteuerten Ausbringen von flüssigem Spritzmittel oder anderem Ausbringgut angeordnet sein.

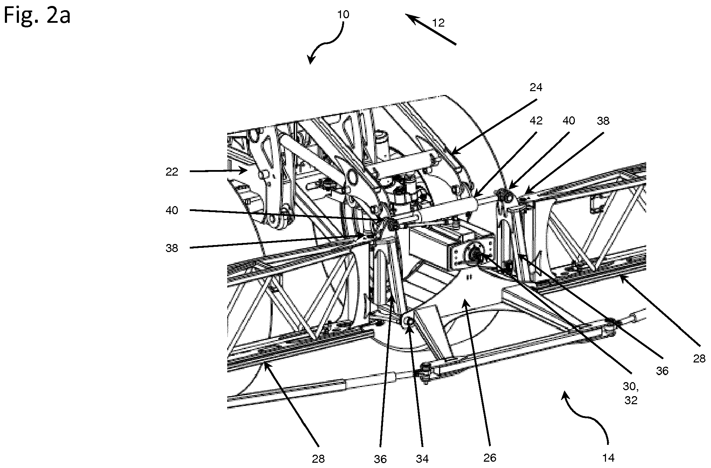

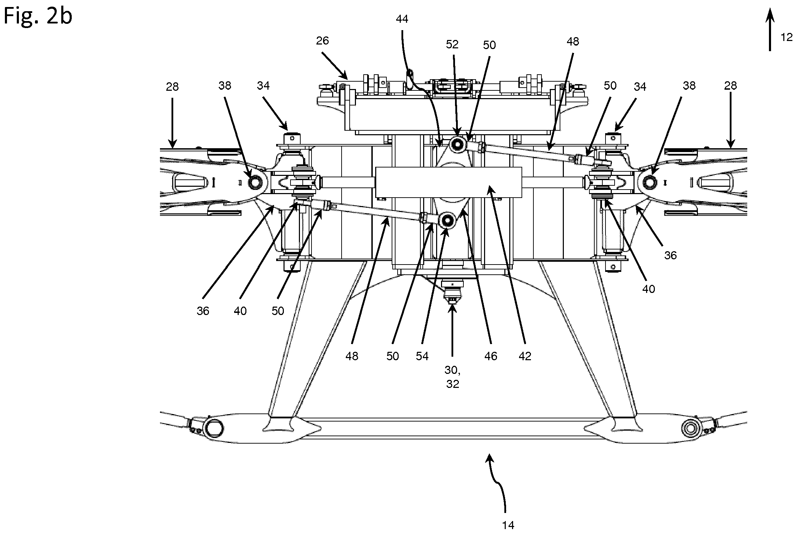

Die schematischen Detailansichten der Figuren 2a und 2b zeigen jeweils den mittleren Bereich einer Verteilvorrichtung 14, wobei wiederum die Fig. 2a dieses in einer schematischen Perspektivansicht und die Fig. 2b dieses in einer schematischen Draufsicht wiedergeben. Die Verteilvorrichtung 14 ist über einen Stützabschnitt 24 mit einem Maschinenrahmen 22 verbunden, wobei der Stützabschnitt 24 als höhenverstellbare Viergelenkanordnung ausgeführt ist. Das Mittelteil 26 des Spritzgestänges 14 ist mit einem Aufhängepunkt 30 versehen; im aufgeführten Beispiel ist dieser als Drehlagerung 30 gestaltet. Mittels dieses Aufhängepunktes wird das Mittelteil 26 bzw. das Spritzgestänge 14 drehbar mit dem Stützabschnitt 24 verbunden. Vorzugsweise ist die Drehlagerung 30 so angebracht, dass sich diese in etwa im Schwerpunkt des Spritzgestänges 14 befindet, wobei sich dieser in der Regel mittig vom Verteilergestänge 14 befindet. Es wäre jedoch auch denkbar, den Aufhängepunkt 30 außerhalb des Schwerpunkts zu platzieren. Beidseitig des Mittelteils 26 sind jeweils über horizontale Schwenkachsen 34 drehbar gelagerte Flanschböcke 36 angebracht. Zusätzlich sind die Flanschböcke 34 mit vertikalen Schwenkachsen 38 versehen, an denen jeweils seitliche Ausleger 28 montiert werden. Über die vertikalen Schwenkachsen 38 kann das Spritzgestänge 14 verschwenkt werden, und zwar zwischen einer ersten Arbeitsposition, in der die Ausleger 28 und das Mittelteil 26 annähernd in einer Linie quer zur Fahrtrichtung 12 stehen, und einer zweiten Transportposition, in der die Ausleger 28 zum Mittelteil 26 so verschwenkt werden, dass eine für eine Transportfahrt maximal zulässige Breite nicht überschritten wird. Dieses Verschwenken kann bspw. mittels Hydraulikzylinder erfolgen, aber auch andere Stellelemente wären vorstellbar. Es sei hierbei noch erwähnt, dass die horizontalen Schwenkachsen 34 sowie die vertikalen Schwenkachsen 38 jeweils so gestaltet sein müssen, dass diese die durch das Spritzgestänge 14 hervorgerufenen Belastungen bspw. durch Bewegungen der Feldspritze 10 aufnehmen und ggf. abdämpfen können. Eine derartige Gestaltung ist jedoch nicht Teil dieser Erfindung, weshalb hierauf nicht näher eingegangen wird.

Über die horizontalen Schwenkachsen 34 können die Ausleger 28 in Bezug auf das Mittelteil 26 bzw. die Feldspritze 10 in Richtung zu einer Bodenoberfläche oder von dieser weg bewegt werden. Wobei hierfür in einem oberen Bereich der beiden Flanschböcke 36 Gelenkpunkte 40 angebracht sind, mittels derer wenigstens ein Stellglied 42 montiert werden kann, und wodurch die beiden Flanschböcke 36 bzw. die beiden Ausleger 28 gemeinsam verbunden werden. Vorzugsweise wird das Stellglied 42, wie in den Figuren 2a und 2b dargestellt, so angebracht, dass die beiden Flanschböcke 36 über dieses verbunden werden. Es wäre jedoch auch vorstellbar, dass das Stellglied 42 so angebracht ist, dass dieses nur mit einem der Flanschböcke 36 verbunden wird. Vorzugsweise wird das Stellglied 42 durch einen Hydraulikzylinder oder einen Hydraulikmotor gebildet. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch wäre eine nichthydraulische Ausgestaltung, bspw. elektromotorisch betriebene Linearmotoren, des Stellgliedes 42 vorstellbar. Im aufgeführten Beispiel erfolgt das Verschwenken der Ausleger in Abhängigkeit der Einbaulänge des Stellgliedes 42, d.h. wird das Stellglied 42 so bewegt, dass es deren Einbaulänge verringert, so wird zumindest einer der Ausleger 28 nach oben bzw. von der Bodenoberfläche weg bewegt. Wird die Einbaulänge vergrößert, wird zumindest ein Ausleger 28 nach unten, also in Richtung zur Bodenoberfläche bewegt.

Wie im aufgeführten Beispiel dargestellt, sieht die Verteilvorrichtung 14 als Verbindungselement zwischen dem Mittelteil 26 und den zwei Auslegern 28 einen zusätzlichen Flanschbock 36 vor, welcher zum einen mit horizontalen Schwenkachsen 34 und zum anderen mit vertikalen Schwenkachsen 38 versehen ist. Darüber hinaus weist dieser im oberen Bereich noch Gelenkpunkte 40 auf, an denen wiederum das Stellglied 42 montiert werden kann. Eine derartige Gestaltung ist jedoch im Rahmen der Erfindung nicht zwingend erforderlich; es wären auch andere Verbindungen zwischen den Auslegern 28 und dem Mittelteil 26 vorstellbar.

Um zum einen zu erreichen, dass die Bewegung der beiden seitlichen Ausleger 28 symmetrisch zueinander erfolgt, und zum anderen dass sich der Schwerpunkt der Verteilvorrichtung 14 annähernd in der Mitte des befindet, sind den Auslegern 28 bzw. den Flanschböcken 36 Mittel bzw. Koppelelemente 44 zugeordnet, mittels derer die Ausleger wirkverbunden werden. Wobei diese Mittel bzw. Koppelelemente 44 im dargestellten Ausführungsbeispiel der Figuren zwei aus einer Schwenkhebel 46 - Koppelstangen 48 Anordnung zusammengesetzt sind.

Hierbei ist ein Schwenkhebel 46 mittig bzw. annähernd mittig zwischen den Flanschböcken 36 drehbar gelagert angebracht. Dem Schwenkhebel 46 sind ein, in Fahrtrichtung vorne gelegenes erstes Gelenk 52 und ein in Fahrtrichtung hinten gelegenes zweites Gelenk 54 zugeordnet. An diesen Gelenken 52, 54 wird jeweils eine Koppelstange 48 angebracht. Wobei eine erste Koppelstange 48 zwischen dem ersten Gelenk 52 und einem Gelenkpunkt 40 des rechten Flanschbock 36 und eine zweite Koppelstange 48 zwischen dem zweiten Gelenk 52 und einem Gelenkpunkt 40 des linken Flanschbock 36 montiert werden. Die Koppelstangen sind an deren Enden jeweils mit zusätzlichen Kugelgelenken 50 versehen, um ggf. axiale oder radiale Versatze ausgleichen zu können. Wird durch Längenänderung des Stellglied 42 zumindest einer der Ausleger 28 bewegt, wird diese Bewegung mittels der, diesem Ausleger 28 zugeordneten, Koppelstange 48 auf den Schwenkhebel 46 übertragen, wodurch dieser eine Drehbewegung, im Uhrzeigersinn oder entgegengesetzt zum Uhrzeigersinn ausführt. Durch diese Drehbewegung wird die Bewegungsrichtung umgekehrt und über die zweite Koppelstange 48, welche dem sich noch in Ruhelage befindlichen Ausleger 28 zugeordnet ist, wird die Bewegung auf den anderen Ausleger 28 bzw. Flanschbock 36 übertragen.

Durch eine derartige Koppelung der Ausleger 28 mit Koppelelementen 44 wird erreicht, dass annähernd jegliche Bewegung, die einer der Ausleger 28 in Richtung zu einer Bodenkontur und von einer Bodenkontur weg ausführt, jeweils symmetrisch auf den sich zunächst nicht bewegenden Ausleger 28 übertragen wird. Darüber hinaus wird durch die erfindungsgemäße Koppelung erreicht, dass die Gewichtsverteilung des Spritzgestänges 14 und damit das auf die Drehlagerung 30 und den Stützabschnitt 24 wirkende Drehmoment stark verringert wird, dass sich Gewichtsdifferenzen zwischen den Auslegern 28 durch die Koppelung jeweils gegenseitig übertragen lassen.

Es sei noch erwähnt, dass die Ausgestaltung der Koppelelemente 44 als Schwenkhebel 46 - Koppelstangen 48 Anordnung nur ein Beispiel wiedergibt. Generell könnten die Koppelelemente 44 auch anders gestaltet werden. Auch könnten andere Mittel oder Koppeleinrichtungen 44 zur Koppelung wie bspw. elektrische oder hydraulisch betätigte Mittel oder Koppeleinrichtungen 44 angewendet werden. Wichtig bei der Auswahl der Mittel oder Koppeleinrichtungen 44 zur Koppelung ist lediglich, dass diese so ausgeführt sind, dass zum einen eine annähernd symmetrische Bewegung der Ausleger 28 zueinander gewährleistet ist und zum anderen, dass zum Verschwenken der zwei Ausleger 28 vorzugsweise nur noch ein Stellglied 42 erforderlich ist.

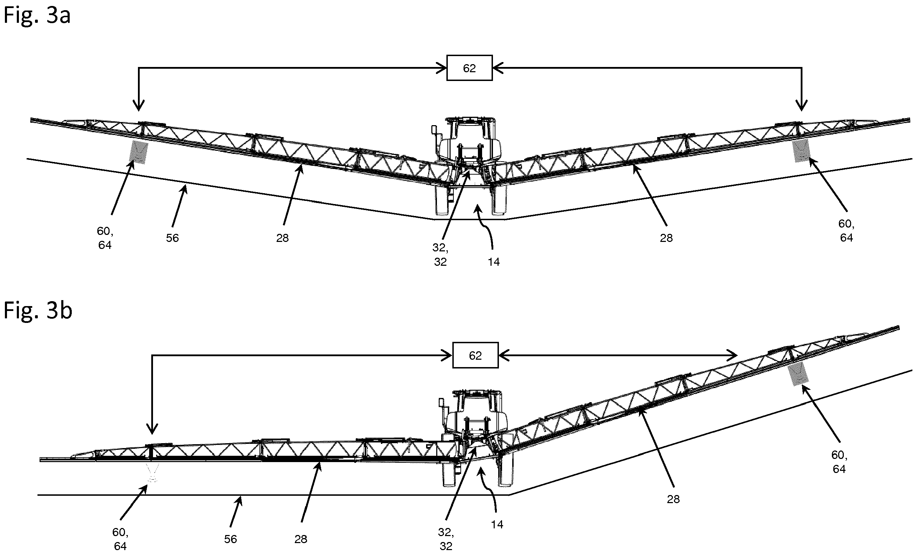

Die schematischen Darstellungen der Figuren 3 (Fig. 3a und Fig. 3b) verdeutlichen jeweils eine Heckansicht auf ein heckseitig an der Verteilmaschine 10 angebrachtes Spritzgestänge 14. Wobei in der Fig. 3a dieses zunächst symmetrisch verschwenkt und entlang einer Bodenkontur 56 geführt wird, und wobei in der Fig. 3b dieses nur auf der rechten Seite verschwenkt wird um entlang einer Bodenkontur 56 geführt zu werden.

So sind an den Auslegern 28 jeweils eine Istwerterfassung 60 in Form von Abstandssensoren 64 angebracht, welche den tatsächlichen Abstand des Spritzgestänges 14 bzw. der Ausleger 28 zu einer Bodenkontur erfasst. Die ermittelten Werte werden anschließend an eine Rechnereinheit 62 übermittelt und mit einem in der Rechnereinheit 62 hinterlegten Sollwert verglichen. Wobei die Übermittlung mittels Kabelverbindung aber auch kabellos erfolgen kann. Anhand der Differenz zwischen Sollwert und Istwert wird zunächst von der Rechnereinheit 62 ermittelt, ob und in welche Richtung bspw. die Ausleger 28 verschwenkt werden müssen. Liegt, wie in Fig. 3a dargestellt, eine Bodenkontur 56 vor, bei der beide Ausleger 28 symmetrisch zueinander verschwenkt werden müssen, wird das Stellglied 42 von der Rechnereinheit 62 angesteuert, und das Stellglied 42 führt eine Positions- bzw. Längenänderung durch, wodurch wiederum die beiden Ausleger 28 symmetrisch zueinander nach oben, also von der Bodenkontur weg bewegt werden. Dies geschieht solange, bis die von der Istwerterfassung 60 ermittelten Werte wieder den in der Rechnereinheit 62 hinterlegten Sollwerten entsprechen.

Liegt eine Bodenkontur 56 wie in Fig. 3b dargestellt vor, werden zunächst wiederum die zwei Ausleger 28 mit dem Stellglied 42 und den Koppelelementen 44 symmetrisch zueinander verschwenkt; zusätzlich wird das Spritzgestänge 14 über den Aufhängepunkt bzw. die Drehlagerung 30 gedreht. Die Drehung des Spritzgestänges 14 erfolgt wiederum in Abhängigkeit der von der Istwerterfassung 60 aktuell vorliegenden Position des Spritzgestänges 14. Die Drehung des Spritzgestänges 14 erfolgt wie in Fig. 3b dargestellt im Gegenuhrzeigersinn, wobei natürlich bei entsprechender Bodenkontur 56 auch eine Drehung im Uhrzeigersinn möglich wäre. Die Drehung des Spritzgestänges 14 erfolgt wiederum solange, bis die von der Istwerterfassung 60 ermittelten Positionsangaben wieder mit den in der Rechnereinheit 62 hinterlegten Sollwerten übereinstimmen.

Um das Spritzgestänge 14 drehen zu können, sind verschiedene Ansätze vorstellbar. So könnte bspw. die Drehlagerung 30 mit einem Drehantrieb 32 versehen werden. Dieser Drehantrieb 32 kann wiederum von der Rechnereinheit 62 angesteuert werden. Auch ein zusätzliches Stellelement, welches zum einen entfernt von Aufhängepunkt 30 mit dem Mittelteil 26 verbunden ist, und zum anderen über eine fahrzeugfeste Lagerung mit der Feldspritze 10 verbunden ist, typischerweise mit dem Maschinenrahmen 22 oder dem Stützabschnitt 24.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: landwirtschaftliche Verteilmaschine, Feldspritze
- 12: Fahrtrichtung
- 14: Verteilvorrichtung, Spritzgestänge
- 16: Fahrzeugachse
- 18: Kabine
- 20: Vorratsbehälter
- 22: Maschinenrahmen
- 24: Stützabschnitt
- 26: Mittelteil
- 28: Ausleger
- 30: Drehlagerung, Aufhängepunkt
- 32: Drehantrieb
- 34: Horizontale Schwenkachse
- 36: Flanschbock
- 38: Vertikale Schwenkachse
- 40: Gelenkpunkt
- 42: Stellglied
- 44: Koppelelement, Mittel
- 46: Schwenkhebel
- 48: Koppelstange
- 50: Kugelgelenk
- 52: erstes Gelenk
- 54: zweites Gelenk
- 56: Bodenkontur
- 60: Istwerterfassung
- 62: Datenverarbeitungsvorrichtung, Rechnereinheit
- 64: Abstandsensor

## Patentansprüche

1. Verteilvorrichtung (14) für eine landwirtschaftliche Verteilmaschine (10) zum Ausbringen von flüssigen und/oder festen Wirkstoffen, mit einem Mittelteil (26) und wenigstens zwei, über horizontale Schwenkachsen (34) drehbar gelagerten und mit dem Mittelteil (26) in Verbindung stehenden Auslegern (28-1, 28-2), wobei wenigstens einem Ausleger (28-1 und/oder 28-2) wenigstens ein Stellglied (42) zur Variation einer Schwenklage des wenigstens einen Auslegers (28-1) oder beider Ausleger (28-1, 28-2) um die horizontale Schwenkachse (34) gegenüber dem Mittelteil (26) zugeordnet ist, insbesondere zur Aufrechterhaltung eines vorgebbaren Abstandes zu einer Bodenkontur (56), umfassend eine Koppeleinrichtung (44), die zur Übertragung einer Schwenkbewegung und/oder veränderlichen Schwenklage des wenigstens einen mit dem Stellglied (42) gekoppelten Auslegers (28-1 und/oder 28-2) auf den jeweils anderen Ausleger (28-2 und/oder 28-1) eine direkte Wirkverbindung zwischen den beiden Auslegern (28-1 und 28-2) herstellt, **dadurch gekennzeichnet, dass** den wenigstens zwei Auslegern (28-1 und 28-2) die Koppeleinrichtung (44) derartig zugeordnet ist, dass eine Gewichtsübertragung von einem Ausleger (28-1 oder 28-2) auf den jeweiligen gegenüberliegenden Ausleger (28-2 bzw. 28-1) erfolgt.

2. Verteilvorrichtung nach Anspruch 1, bei der die Koppeleinrichtung (44) eine mechanische Verbindung zwischen den beiden Auslegern (28-1 und 28-2) herstellt.

3. Verteilvorrichtung nach Anspruch 1 oder 2, bei der die Koppeleinrichtung eine Wirkverbindung zur gleichsinnigen und/oder weitestgehend gleichsinnigen Übertragung einer Schwenkbewegung und/oder einer eingestellten Schwenklage um eine horizontale Schwenkachse (34) des mittels des Stellgliedes (42) verschwenkbaren ersten Auslegers (28-1) auf den zweiten Ausleger (28-2) herstellt.

4. Verteilvorrichtung nach Anspruch 1 oder 2, bei der die Koppeleinrichtung eine Wirkverbindung zur symmetrischen und/oder weitestgehend symmetrischen Übertragung einer Schwenkbewegung und/oder einer eingestellten Schwenklage um eine horizontale Schwenkachse (34) des mittels des Stellgliedes (42) verschwenkbaren ersten Auslegers (28-1) auf den zweiten Ausleger (28-2) herstellt.

5. Verteilvorrichtung nach einem der Ansprüche 1 bis 4, bei der das wenigstens eine Stellglied (42) mit wenigstens einem der Ausleger (28-1 oder 28-2) verbunden ist, und dieser aufgrund einer Positions- und/oder Längenänderung des Stellgliedes (42) um die horizontale Schwenkachse (34) verschwenkt wird.

6. Verteilvorrichtung nach einem der Ansprüche 1 bis 4, bei der das wenigstens eine Stellglied (42) mit beiden Auslegern (28-1 und 28-2) verbunden ist, wobei wenigstens einer der Ausleger (28-1 und/oder 28-2) aufgrund einer Positions- und/oder Längenänderung des Stellgliedes (42) um die horizontale Schwenkachse (34) verschwenkt wird.

7. Verteilvorrichtung nach einem der Ansprüche 1 bis 6, bei der die Koppeleinrichtung (44) als wenigstens zwei hydraulisch arbeitende Linearantriebe ausgeführt ist, die mittels eines Master-Slave-Prinzips verbunden sind und/oder untereinander wirkverbunden sind.

8. Verteilvorrichtung nach einem der Ansprüche 1 bis 6, bei der die Koppeleinrichtung (44) als hydraulische Motoren ausgeführt ist.

9. Verteilvorrichtung nach einem der Ansprüche 1 bis 6, bei der die Koppeleinrichtung (44) als elektrische arbeitende Stellglieder ausgeführt ist.

10. Verteilvorrichtung nach einem der Ansprüche 1 bis 6, bei der die Koppeleinrichtung (44) als Schwenkhebel (46) -Koppelstangen (48) -Verbindung ausgeführt ist.

11. Verteilvorrichtung nach einem der Ansprüche 1 bis 6, bei der die Koppeleinrichtung (44) als Zahnrad-Zahnstangen-Verbindung ausgeführt ist.

12. Verteilvorrichtung nach einem der Ansprüche 7 bis 11, bei der die Koppeleinrichtung (44) einteilig ausgebildet ist.

13. Verteilvorrichtung nach einem der Ansprüche 7 bis 12, bei der die Koppeleinrichtung (44) drehbar zwischen den wenigstens zwei Auslegern (28) angebracht ist.

## Claims

1. A distribution apparatus (14) for an agricultural distribution machine (10) for spreading liquid and/or solid active agents, the distribution apparatus (14) having a middle part (26) and at least two cantilevers (28-1, 28-2), which are rotatably mounted via horizontal pivoting axes (34) and which are in connection to the middle part (26), wherein at least one actuator (42) is assigned to at least one cantilever (28-1 and/or 28-2) for the purpose of varying a pivoting position of the at least one cantilever (28-1) or of both cantilevers (28-1, 28-2) about the horizontal pivoting axis (34) in relation to the middle part (26), in particular for maintaining a specifiable distance to a ground contour (56), the distribution apparatus (14) comprising a coupling device (44), which establishes a direct operative connection between the two cantilevers (28-1 and 28-2) for the purpose of transmitting a pivoting motion and/or a variable pivoting position of the at least one cantilever (28-1 and/or 28-2), which is coupled with the actuator (42), onto the respective other cantilever (28-2 and/or 28-1), **characterised in that** the coupling device (44) is assigned to the at least two cantilevers (28-1 and 28-2) in such a manner that a weight transfer is carried out from one cantilever (28-1 or 28-2) onto the respective oppositely positioned cantilever (28-2 or 28-1, as the case may be).

2. The distribution apparatus as recited in claim 1, in which the coupling device (44) establishes a mechanical connection between the two cantilevers (28-1 and 28-2).

3. The distribution apparatus as recited in claim 1 or 2, in which the coupling device establishes an operative connection for the transmission in the same direction and/or to the greatest possible extent in the same direction of a pivoting motion and/or of an adjusted pivoting position about a horizontal pivoting axis (34) of the first cantilever (28-1), which is pivotable by means of the actuator (42), onto the second cantilever (28-2).

4. The distribution apparatus as recited in claim 1 or 2, in which the coupling device establishes an operative connection for the symmetric and/or to the greatest possible extent symmetric transmission of a pivoting motion and/or of an adjusted pivoting position about a horizontal pivoting axis (34) of the first cantilever (28-1), which is pivotable by means of the actuator (42), onto the second cantilever (28-2).

5. The distribution apparatus as recited in one of the claims 1 to 4, in which the at least one actuator (42) is connected to at least one of the cantilevers (28-1 or 28-2), and this cantilever (28-1 or 28-2) is pivoted about the horizontal pivoting axis (34) due to a position change and/or length change of the actuator (42).

6. The distribution apparatus as recited in one of the claims 1 to 4, in which the at least one actuator (42) is connected to both cantilevers (28-1 and 28-2), wherein at least one of the cantilevers (28-1 and/or 28-2) is pivoted about the horizontal pivoting axis (34) due to a position change and/or length change of the actuator (42).

7. The distribution apparatus as recited in one of the claims 1 to 6, in which the coupling device (44) is designed as at least two hydraulically operating linear actuators, which are connected to each other and/or operatively connected to each other by using a master-slave principle.

8. The distribution apparatus as recited in one of the claims 1 to 6, in which the coupling device (44) is designed as hydraulic motors.

9. The distribution apparatus as recited in one of the claims 1 to 6, in which the coupling device (44) is designed as electrically operating actuators.

10. The distribution apparatus as recited in one of the claims 1 to 6, in which the coupling device (44) is designed as a connection of pivoting lever (46) and coupling rods (48).

11. The distribution apparatus as recited in one of the claims 1 to 6, in which the coupling device (44) is designed as a gear wheel-rack connection.

12. The distribution apparatus as recited in one of the claims 7 to 11, in which the coupling device (44) is formed in one piece.

13. The distribution apparatus as recited in one of the claims 7 to 12, in which the coupling device (44) is arranged rotatably between the at least two cantilevers (28).

## Revendications

1. Dispositif de distribution (14) pour une machine agricole de distribution (10) destinée à épandre des principes actifs liquides et/ou solides, comprenant une partie centrale (26) et au moins deux flèches (28-1, 28-2) logées à rotation par l'intermédiaire d'axes de pivotement horizontaux (34) et en communication avec ladite partie centrale (26), dans lequel au moins un actionneur (42) est associé à au moins une flèche (28-1 et/ou 28-2) pour faire varier une position de pivotement de ladite au moins une flèche (28-1) ou des deux flèches (28-1, 28-2) autour de l'axe horizontal de pivotement (34) par rapport à la partie centrale (26), en particulier pour maintenir une distance prédéterminable par rapport à un contour de sol (56), comprenant un dispositif d'accouplement (44) qui, pour transmettre, à l'autre flèche respective (28-2 et/ou 28-1), un mouvement de pivotement et/ou une position de pivotement variable de ladite au moins une flèche (28-1 et/ou 28-2) couplée à l'actionneur (42), établit une liaison active directe entre les deux flèches (28-1 et 28-2), **caractérisé par le fait que** ledit dispositif d'accouplement (44) est associé auxdites au moins deux flèches (28-1 et 28-2) de telle sorte qu'il se produit une transmission de poids d'une flèche (28-1 ou 28-2) à la flèche (28-2 ou bien 28-1) opposée respective.

2. Dispositif de distribution selon la revendication 1, dans lequel le dispositif d'accouplement (44) établit une liaison mécanique entre les deux flèches (28-1 et 28-2).

3. Dispositif de distribution selon la revendication 1 ou 2, dans lequel le dispositif d'accouplement établit une liaison active pour la transmission de même sens et/ou dans une large mesure de même sens, à la deuxième flèche (28-2), d'un mouvement de pivotement et/ou d'une position réglée de pivotement autour d'un axe horizontal de pivotement (34) de la première flèche (28-1) apte à pivoter au moyen de l'actionneur (42).

4. Dispositif de distribution selon la revendication 1 ou 2, dans lequel le dispositif d'accouplement établit une liaison active pour la transmission symétrique et/ou dans une large mesure symétrique, à la deuxième flèche (28-2), d'un mouvement de pivotement et/ou d'une position réglée de pivotement autour d'un axe horizontal de pivotement (34) de la première flèche (28-1) apte à pivoter au moyen de l'actionneur (42).

5. Dispositif de distribution selon l'une quelconque des revendications 1 à 4, dans lequel ledit au moins un actionneur (42) est relié à l'une au moins des flèches (28-1 ou 28-2), et celle-ci est pivotée autour de l'axe horizontal de pivotement (34) en raison d'un changement de position et/ou en longueur de l'actionneur (42).

6. Dispositif de distribution selon l'une quelconque des revendications 1 à 4, dans lequel ledit au moins un actionneur (42) est relié aux deux flèches (28-1 et 28-2), dans lequel l'une au moins des flèches (28-1 et/ou 28-2) est pivotée autour de l'axe horizontal de pivotement (34) en raison d'un changement de position et/ou en longueur de l'actionneur (42).

7. Dispositif de distribution selon l'une quelconque des revendications 1 à 6, dans lequel le dispositif d'accouplement (44) est réalisé en tant qu'au moins deux entraînements linéaires fonctionnant de manière hydraulique qui sont reliés au moyen d'un principe maître-esclave et/ou sont en liaison active les uns avec les autres.

8. Dispositif de distribution selon l'une quelconque des revendications 1 à 6, dans lequel le dispositif d'accouplement (44) est réalisé en tant que moteurs hydrauliques.

9. Dispositif de distribution selon l'une quelconque des revendications 1 à 6, dans lequel le dispositif d'accouplement (44) est réalisé en tant qu'actionneurs fonctionnant de manière électrique.

10. Dispositif de distribution selon l'une quelconque des revendications 1 à 6, dans lequel le dispositif d'accouplement (44) est réalisé en tant que liaison levier pivotant (46)/tiges d'accouplement (48).

11. Dispositif de distribution selon l'une quelconque des revendications 1 à 6, dans lequel le dispositif d'accouplement (44) est réalisé en tant que liaison roue dentée/crémaillère.

12. Dispositif de distribution selon l'une quelconque des revendications 7 à 11, dans lequel le dispositif d'accouplement (44) est réalisé en une seule pièce.

13. Dispositif de distribution selon l'une quelconque des revendications 7 à 12, dans lequel le dispositif d'accouplement (44) est monté à rotation entre lesdites au moins deux flèches (28).
